# EUROPEAN PATENT SPECIFICATION

(11) **EP 1 669 862 B1**
(45) Date of publication and mention of the grant of the patent: **01.03.2017**
(21) Application number: 06110326.3
(22) Date of filing: 16.11.2000
(51) Int. Cl.: G06F 9/44, G06F 9/445, H04M 1/247, H04M 1/725

(54) **Method relating to and communication device with setting parameter groups**
Verfahren und Kommunikationseinrichtung in Bezug auf Gruppen von Einstellungsparametern
Procédé relatif à des groupes de paramètres de réglage et dispositif de communication comportant ceux-ci

(30) Priority: 16.11.1999 US 441052
(43) Date of publication of application: 14.06.2006
(62) Divisional of application: 00979694.7
(73) Proprietor: Nokia Technologies Oy, 02610 Espoo (FI)
(72) Inventor: Heinonen, Eeva-Liisa, FI-33200, Tampere (FI); Itävaara, Jaakko, FI-02400, Kirkkonummi (FI); Karves, Heidi, FI-33560, Tampere (FI); Kronström, Kai, 00200 Helsinki (FI); Lehtinen, Kari, Houston, Texas 77027 (US); Mononen, Jari, 36110, Ruutana (FI); Nykänen, Petri, FI-33240, Tampere (FI); Virtanen, Mikko, FI-00270, Helsinki (FI)
(74) Representative: Potter Clarkson LLP

(56) References cited:
- WO-A-90/04841
- WO-A-98/07265
- WO-A-99/21101
- US-A- 5 903 845

## Description

This patent application is a divisional of European patent application 00 979 G94

### BACKGROUND OF THE INVENTION

### Field of the Invention

This invention relates to setting parameter groups in communication devices, and more specifically to adding application specific parameters to setting parameter groups in communication devices, and launching commands based on the current setting parameter group of the communication device.

### Background and Material Information

Conventional communication devices, such as phones, portable computers, Personal Communicators, Smart Phones, etc., may have information stored in setting parameter groups in the devices that relate to settings of the devices. When a particular setting parameter group is selected the device is in a particular operational mode in the sense that it operates according to the settings of the particular selected group of settings. Currently, setting parameter groups are used in communication devices to control several parameters or parameter values at one time. If the communication device is a mobile phone, these parameters may include, for example, ringing tone, volume, message alert tone, etc. The parameters control settings of the mobile device. Setting parameter groups contain sets of parameter settings such that by using a specific setting parameter group, several parameters and/or parameter values are automatically set. Currently, the number of parameters in a particular setting parameter group may be pre-set. Therefore, the user cannot add or delete any parameters from the set included in the setting parameter group.

EP 0 611 070 discloses a portable phone whose phone settings are stored in groups (modes) so that the user, when switching from one group to another, can switch several settings at a time. A single operation by the user may set the ringing strength, loudspeaker volume, display light, etc. Fig. 3 of EP 0 611 070 shows the relationship between operating characteristics (e.g., sound volume, ringing tone, lights, etc.) and defined groups (e.g., indoors, outdoors, conference, etc.).

EP 0 865 188 discloses portable phones that may have various modes or profiles that can be selected manually, or automatically in response to the phone's surroundings based on a sensed control parameter. The profiles are located in the portable phone, and each profile may define multiple settings for the phone or user.

WO 99/21101 discloses automatically switching a communication device into or out of a special mode with different, user selectable, settings when a calendar application identifies the start or the end of a meeting.

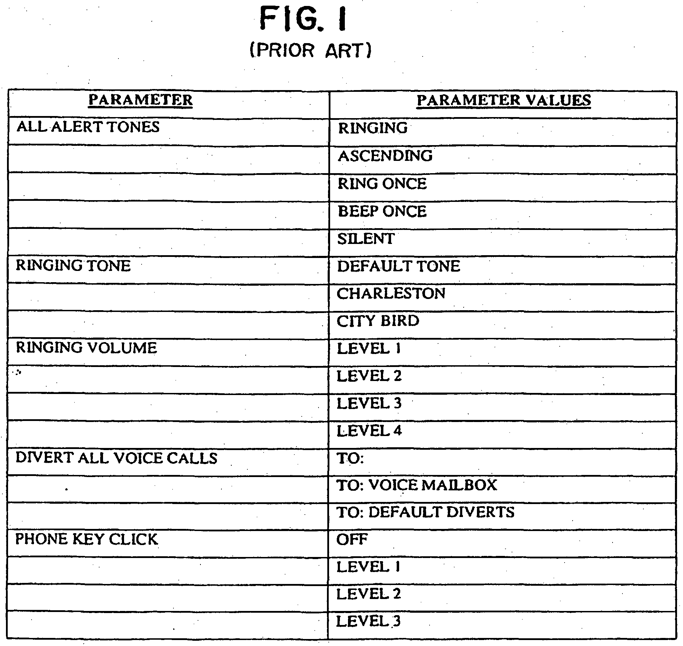

Fig. 1 shows a table of some example parameters and parameter values that may exist in a setting parameter group of a communication device that is a communicator. The first column of the table shows the name of the parameter. As shown, the parameters in the setting parameter group of a communicator may include parameters such as alert tones, ringing tone, ringing volume, voice call diversion, or phone key click. The second column in Fig. 1 shows the possible values for each parameter. For example, the ringing volume parameter may be set to any one of levels 1 through 4. Currently, a user of a communication device, such as this, may select from the parameter values for a particular parameter, however, the user may not be able to get new parameters or parameter values included in an existing setting parameter group of the communication device.

In the past, communication devices have had limited capability, and not many additional applications have been available. Therefore, communication devices only needed a few setting parameter groups with only a few parameters in each. For example, Nokia 6110-series mobile phones have only a couple of different parameters for volume control (incoming call alert, incoming message alert, warning and game tones, etc.) which appeared to be sufficient. Today, communication devices have increased capability, and many more applications are available for installation into communication devices that add even more capability. Forthcoming communication devices may offer many more possibilities for additional software and features.

### SUMMARY OF THE INVENTION

Accordingly, the present invention is directed to a method for setting application specific setting parameter group parameters in setting parameter groups of communication devices that substantially obviates one or more of the problems arising from the limitations and disadvantages of the related art.

One aspect of the present invention is directed to a methods and devices for modifying setting parameter groups in a communication device based on application specific parameters. The setting parameter groups of the communication device may be modified by adding at least one of the application specific parameters of an application to at least one of the setting parameter groups of the communication device.

Whether the setting parameter groups of the communication device may be modified is determined. The determining may include the application querying a profile management application whether the setting parameter groups of the communication device may be modified. The determining may include querying the application by a profile management application whether the application has modifications for the setting parameter groups of the communication device.

The application may be installed in the communication device prior to or currently with the modifying of the setting parameter groups of the communication device. The modifying the setting parameter groups may include adding associated default values of the application specific parameters to the setting parameter groups. Standard setting parameter group parameters in the application may be recognized and default values automatically set for the standard setting parameter group parameters (e.g. in new setting parameter groups). The standard setting parameter group parameters being recognized by a profile management application.

The application may communicate with a profile management application. The profile management application may perform the modifying of the setting parameter groups of the communication device. The application and the profile management application may communicate through at least one Application Program Interface (API). A profile action API may enable the profile management application to pass commands to the application according to parameters. It also may enable the application to pass commands to the profile manager application to set a new active profile. A profile action API may enable the application to select a new setting parameter group when the application becomes active. A profile variable API may enable the adding of the application specific parameters of the application and their associated default values to the setting parameter groups.

Less than all of the setting parameter groups of the communication device may be modified. The communication device may be a mobile device. The mobile device may be a wireless mobile phone. The mobile device may be a Personal Communicator. The mobile device may be a portable computer. The mobile device may be a Smart Phone.

Specific setting parameter group parameter values for the application may be automatically set when the application becomes active.

A further aspect of the present invention is directed to a method for forming new setting parameter groups in a communication device that includes installing an application in the communication device and creating at least one new setting parameter group for the communication device based on the application. The new setting parameter group may be formed by adding application specific parameters to the at least one new setting parameter group, adding existing parameters from existing setting parameter groups to the at least one new setting parameter group, or by adding application specific parameters and adding existing parameters from existing setting parameter groups to the at least one new setting parameter group.

The modification of the setting parameter groups may be performed automatically by the communication device.

Another aspect of the present invention is directed to methods and devices for launching commands after a setting parameter group change. At least one command to be automatically launched when the at least one setting parameter group becomes a current setting parameter group currently used by the communication device may be entered into at least one setting parameter group of a communication device of the user. Whether the current setting parameter group has any at least one command to be automatically launched may be determined. The at least one command may be launched automatically if the current setting parameter group has at least one command to be automatically launched.

A command may be launched that causes information to be sent to a network conveying that the application is active in the communication device. The entering, and determining may be performed by a profile manager of the communication device.

A communication device may have at least one setting parameter group that controls settings of the communication device. The communication device may have a process for modifying setting parameter groups in the communication device based on application specific parameters. The setting parameter groups of the communication device may be modified. The setting parameter groups may be modified by adding the application specific parameters of the application to the setting parameter groups of the communication device. Specific setting parameter group parameter default values for the application may be automatically set when the application becomes active.

A communication device may have at least one setting parameter group that controls settings of the communication device. The communication device may have a process for launching commands after a setting parameter group change. At least one command to be automatically launched when the at least one setting parameter group becomes a current setting parameter group currently used by the communication device may be entered into at least one setting parameter group of a communication device of the user. Whetherthe current setting parameter group has any at least one command to be automatically launched may be determined. The at least one command may be launched automatically if the current setting parameter group has at least one command to be automatically launched.

The invention is set out in the independent claims 1 and 6.

Other exemplary embodiments and advantages of the present invention may be ascertained by reviewing the present disclosure and the accompanying drawings.

### BRIEF DESCRIPTION OF THE DRAWINGS

The present invention is further described in the detailed description which follows in reference to the noted plurality of drawings by way of non-limiting examples of preferred embodiments of the present invention in which like reference numerals represent similar parts throughout the several views of the drawings and wherein:
Fig. 1 is a table of some example parameters and parameter values that may exist in a setting parameter group of a communication device;
Fig. 2 is a diagram of a communication device with a new application and its interfaces with a profile manager according to the present invention;
Fig. 3 is a flowchart of an exemplary process for setting application specific parameters in setting parameter groups of communication devices according to the present invention;
Fig. 4 is a flowchart of an exemplary process for launching commands due to the current setting parameter group of a communication device according to the present invention; and
Fig. 5 is a flowchart of an exemplary process for a launched command that causes a communication device to send information to a network based on a particular setting parameter group being the current setting parameter group according to the present invention.

### DETAILED DESCRIPTION OF THE PREFERRED EMBODIMENTS

The particulars shown herein are by way of example and for purposes of illustrative discussion of the embodiments of the present invention. The description taken with the drawings make it apparent to those skilled in the art how the several forms of the present invention may be embodied in practice.

According to the present invention, specific parameters that relate to an application are allowed to be added to the existing setting parameter groups of a communication device. Communication devices include many types of devices, such as, for example, wireless phones, Personal Communicators, Smart Phones, and portable computers. The application specific parameters are added to the existing setting parameter groups of the communication device during the installation of the application in the communication device.

New parameters may be created by modifying existing parameters. This new parameters may then be added to a new setting parameter groups. Further, default values of existing parameters may be modified and added to new setting parameter groups.

Each application may have parameter settings that are customized for the application. These application specific parameter settings may be the same as existing parameters, or different from those that may currently exist in the setting parameter groups of the communication device. By adding parameters to setting parameter groups of the communication device, anytime the application is active or being used in the communication device by the user, the communication device uses the application specific parameters in whichever setting parameter group is currently being used. Therefore, the user does not have to manually adjust or set the parameters for the current setting parameter group each time the user activates or uses the application. Further, the application settings do not have to be changed to fit the current setting parameter group.

The present invention will be illustrated using an exemplary embodiment of the communication device being a mobile device such as a wireless mobile phone. However, the present invention is not limited by this embodiment, and is meant to cover all embodiments of methods and devices related to communication devices, mobile or not, that are within the spirit and scope of the present invention.

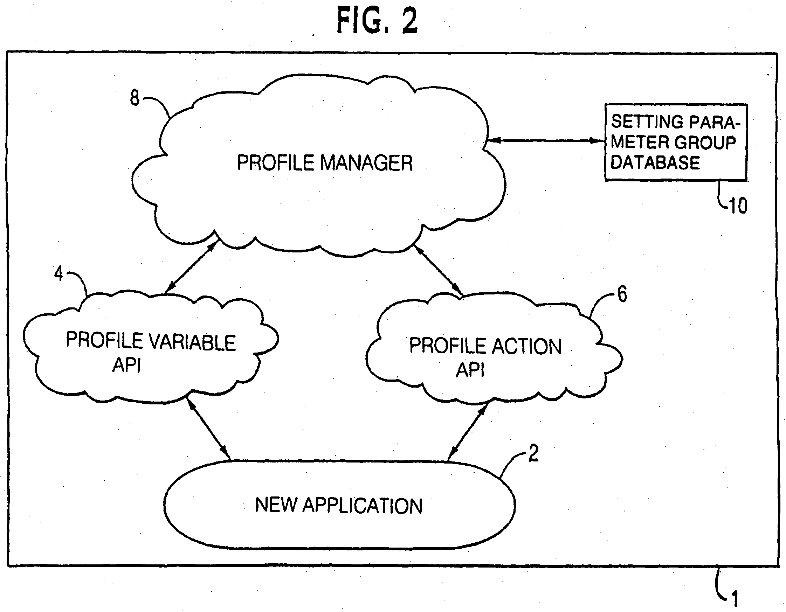

Fig. 2 is an exemplary system diagram of a mobile device 1 with a new application and its interfaces with a profile manager according to the present invention. The new application 2 may use two Application Programming Interfaces (APIs) 4, 6 to interface with a profile manager 8. Profile manager 8 may be a software application or a combination of software and hardware. Profile manager 8 controls access to a setting parameter group database 10 that contains the setting parameter groups for the mobile device. The profile variable API 4 maybe used by new application 2 to send requests and information to profile manager 8. New application 2 may use profile variable API 4 to determine if new parameters can be added to the setting parameter groups of the mobile device, and also to send the parameters to profile manager 8 so that they can be added to the setting parameter groups in setting parameter group database 10. Profile action API 6 may be used by profile manager 8 to communicate to application 2 what current setting parameter group is being used in the mobile device. Profile action API 6 may also be used to communicate the possible actions/commands that the selected setting parameter group contains (e.g., a command that tells the application to "send device name and current setting parameter group name to server XYZ"). Further, profile action API 6 may enable a new setting parameter group to be selected by an application when the application is activated. These communications may occur between profile manager 8 and all applications, just active applications, or just applications that may be affected by the current setting parameter group.

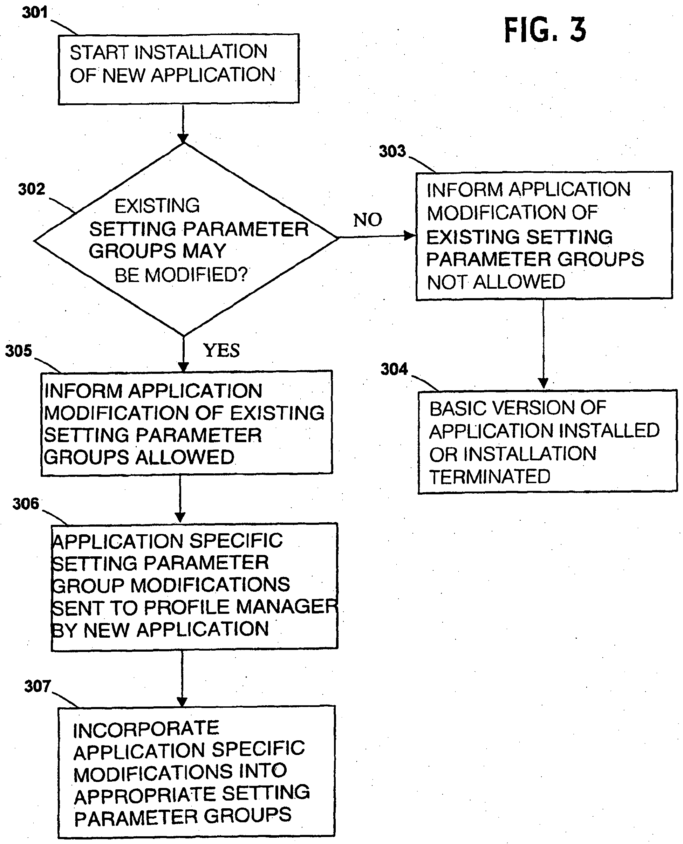

Fig. 3 is a flowchart of an exemplary process for setting application specific setting parameter group parameters in setting parameter groups of communication devices according to the present invention. Again using the mobile device embodiment, a user may want to add a new application to a mobile device. The appropriate hardware connections are made to allow installation of the new application. The hardware connection may be any of many known methods for downloading or installing applications (e.g., a connection between the mobile device and a computer).

The installation of the new application is started (301). The profile manager determines whether the existing setting parameter groups may be modified (i.e., new parameters added to the existing setting parameter groups of the mobile device) (302).

In some cases, the existing setting parameter groups may not be modifiable (e.g., parameters cannot be added). For example, the current operating system and/or setting parameter groups in the mobile device may be so old that the application specific parameters are not compatible with them. Further, the manufacturer of the mobile device and/or profile manager may have designed the setting parameter groups in the mobile device to not support adding of new parameters and, therefore, application specific parameters from new applications will not be allowed to be added to the existing setting parameter groups. Also, there may be limited space in the existing setting parameter groups where there is no room to add additional parameters. If the setting parameter groups are not allowed to be modified, the profile manager will inform the new application of this fact (303). The new application may then allow installation of just a basic version of the application, or terminate the installation (304).

If modification of existing setting parameter groups is allowed, the profile manager may inform the new application of this (305). The new application may then use the profile variable API to send to the profile manager the application specific setting parameter group modifications (i.e., new parameters to add, or parameters to add that are modifications of existing parameters) (306). This may also include adding associated default values of the application specific parameters to the setting parameter groups. Further, the profile manager may recognize standard setting parameter group parameters in the application and automatically set defaults for the standard setting parameter group parameters. The profile manager then may incorporate these application specific modifications in some or all of the existing setting parameter groups in the mobile device (307).

There may be cases where the application specific modifications are only to be incorporated into certain existing setting parameter groups, and not all of them. In this situation, the new application may also send the profile manager information regarding which existing setting parameter groups of the mobile device should have the application specific modifications incorporated into them. The application specific modifications may be added to the existing setting parameter groups of the mobile device concurrently with the installation of the new application in the mobile device.

Moreover, according to the present invention, installation of a new application may initiate the creation of a new setting parameter group. The new setting parameter group may be formed from new application specific parameters being added to it, formed from existing parameters from existing setting parameter groups being added to it, or formed from a combination of new and existing parameters being adding to the new profile. Further, modification of setting parameter groups, and creation of new setting parameter groups may be performed automatically upon the installation of a new application.

By importing the modified or new parameters to the profile manager, the application may be allowing the profile manager to control it to some extent. For example, this may allow the profile manager to control parameters such as volume (e.g., game sounds if the application is a game), the screen, or the user interface when the application is active or being used. Instead of the program manager managing the modification of parameter values, the modified or added operating parameters may be set only in the application they were installed with, not in the setting parameter groups/menu settings in the operating system. Each application may have a settings view, which may be used for setting the parameters to preferred values from the available parameter values. The changed parameter value would be saved for the currently active setting parameter group. For example, when the user wants to set the game tones to off when in a meeting, the "meeting" setting parameter group should be set as the current setting parameter group, and the settings changed in the game application. The next time the "meeting" setting parameter group is the current setting parameter group, the game tones may be automatically set to off.

The application specific parameters may be presented in a separate view of the setting parameter groups settings. The user would not see them in normal usage, but only when specifically needed, e.g., when a specific application or setting parameter group becomes active.

Also, the total number of application specific parameters may be limited to a set number (e.g., 0 < 20) by the communications device.

Instead of the new application sending a query to the profile manager whether new parameters may be added to the existing setting parameter group of the communication device, the profile manager may query the new application whether the new application has any new parameters. If the new application has new parameters, the profile manager may then fetch the new parameters from the application.

According to the present invention, the user may configure different applications with the user's own parameter values to better fit the user's needs in each setting parameter group. One useful example is sound. In some cases, controlling all device sounds with one value is not enough. Some applications may want to push their warning or alert tones even though the communication device is in a current setting parameter group where sounds are set to be silent. Also, some sounds may be turned off even though some other sounds are enabled. For example, in a "meeting" operational mode, where incoming calls may be signaled with a small beep, specific game or E-mail sounds may be turned off, but some warning tones may still be enabled.

Controlling incoming messages and calls may also be personalized. An additional feature in the application in the communication device might recognize urgent messages, and allow only the urgent messages to be alerting while the communication device is in a "meeting" setting parameter group mode. With partial control of the screen of the communication device, E-mails sent with high importance and received by the communication device, may be shown directly on the screen of the communication device, even though some other application may be active.

With a certain setting parameter group selected, an application may be given a permission to always control a certain area of the screen. For example, with "meeting" setting parameter group selected it may be useful to see all SMS messages on top of the screen, no matter what application is running. On the other hand, with a "normal" setting parameter group selected this would not be practical, as it decreases the screen area available. Further, once a certain setting parameter group is selected, an application that controls the screen and presents messages may be automatically launched. For example, with a certain setting parameter group selected, a parameter "enable screen control to application A" may be set to "ON", therefore allowing the application A to present a SMS or high importance email to the screen.

According to the present invention, commands may be activated upon changing from an existing current setting parameter group to a new current setting parameter group (i.e., when a new setting parameter group is selected to replace the currently used setting parameter group). For example, if the setting parameter group of the communication device currently selected is "normal", and then the user desires to play a game, the user may change the setting parameter group to "game". Once the selected setting parameter group has be changed to "game", a particular game is launched and/or activated. The particular game launched may have been previously setup when a "game" setting parameter group was active. Therefore, the user, once changing the setting parameter group to "game", does not have to then activate the game application since it may be activated automatically upon selection of the "game" setting parameter group. If the user decides that the next time the setting parameter group is changed to "game", a different game is desired, the user may enter the different game information into the "game" setting parameter group (e.g., =set the value to game1 or game2). There may be one parameter in the setting parameter group for each application that contains the information to launch the particular application through the profile action API. However, the setting parameter group may have several parameters, one for each application, that may cause the launching of several commands simultaneously upon the selection of this particular setting parameter group as the current setting parameter group of the communications device. Further, these commands may cause the launching of several applications simultaneously.

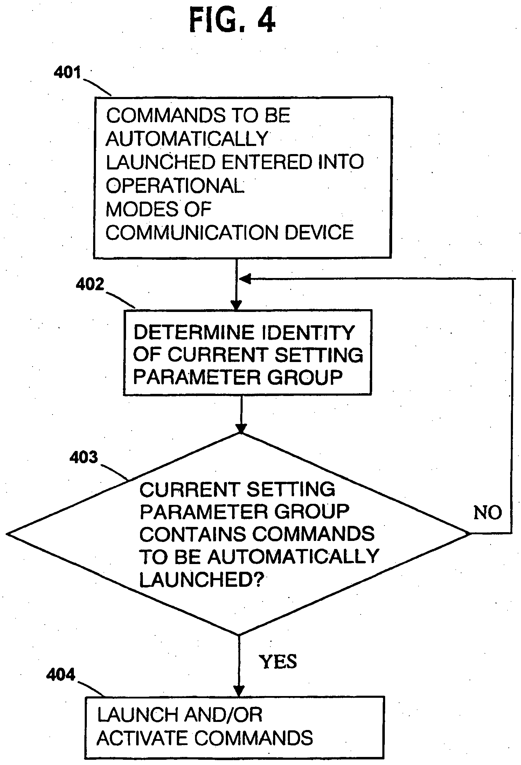

Fig. 4 is a flowchart of an exemplary process for launching commands based on the current setting parameter group of a communication device. The user enters into the setting parameter groups commands, for each setting parameter group, to be automatically activated when the setting parameter group becomes the currently used setting parameter group (current setting parameter group) of the communications device (401). The profile manager identifies the current setting parameter group (402), and then determines whether this current setting parameter group has commands that should be automatically launched and/or activated (403). If so, the operating system of the communication device launches and/or activates the commands (404). If the current setting parameter group does not have commands that should be automatically launched and/or activated, the operating system resumes monitoring the identity of the current setting parameter group to detect a change (402).

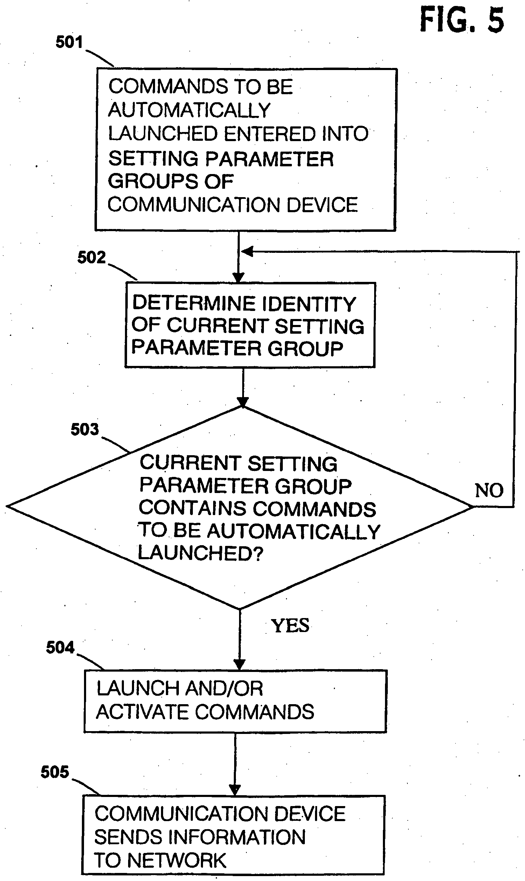

Further, using the exemplary embodiment of the game application, the game application may also automatically cause the communication device to send information to a network that the game application is active in the communication device, and/or that the user is ready to play the game. This information may be sent during the launching of the application. Fig. 5 is a flowchart of an exemplary process for a launched command that causes a communication device to send information to a network based on a particular setting parameter group being the current setting parameter group of the communication device and containing commands causing the communication device to automatically send the information to a network as soon as the particular setting parameter group becomes the current setting parameter group of the communication device.

The user enters into the setting parameter groups specific commands, for each setting parameter group, to be activated when the setting parameter group becomes the current setting parameter group of the communications device (501). The profile manager identifies the current setting parameter group (502), and then determines whether this current setting parameter group has commands that should be automatically launched and/or activated (503). If so, the operating system of the communication device launches and/or activates the commands (504). The operating system executes commands causing the communication device to send information to a network (505). The information may be related to the current setting parameter group, applications launched based on the current setting parameter group, or user information based on the current setting parameter group. If the current setting parameter group does not have commands that should be automatically launched and/or activated, the operating system resumes monitoring the identity of the current setting parameter group to detect a change (502).

Above some examples of new applications have been described in relation to which the invention can be utilised. In following are further examples of new applications that can be installed into a communication device and examples of application specific parameters that can be added as parameters to a new or old setting parameter group. One example of an application is a virus scanning program, whereby a parameter could be added to a setting parameter group (e.g. to setting parameter group "meeting" or "silent" which typically indicate that the user is in a meeting and will not be using the communication device actively) for starting the virus scanning program to scan for viruses whenever that setting parameter group (e.g. "meeting") is selected. Further parameters that could be added to a "meeting" setting parameter group is automatic call divert to another number (e.g. to the number of the user's secretary) or a automatic transmission of a short message to the secretary's device that the user has gone to a meeting, both of which could automatically be activated upon selection of the "meeting" setting parameter group. Another example of an application is a game application where the game runs on a remote server to which the communication device is in wireless connection. In this case a setting parameter that could be added to a setting parameter group is one that would automatically cause a transmission to the game server upon selection of the "game" setting parameter group to inform the server that this group was selected. Another example of a new application could be a call management program that only alerts on certain calls (e.g. calls from one's boss or child), whereby the application specific parameter that would be added to a setting parameter group is the phone number(s) that will be alerted upon receiving calls when that particular setting parameter group is on. A further application could be a localisation application, and application specific parameter to add to a setting parameter group could be allowing of the localisation application to update or remind of nearby gas stations (or hotels etc) when the communication device is in the car, i.e. when the "car" setting parameter group is selected (the selection of which can be automatically performed upon placing the communication device in the car cradle), and further a setting in other groups (than the "car" setting parameter group) to not send such updates or reminders. In relation to a calendar application there could be a parameter blocking the giving of calendar reminders when the "car" setting parameter group is selected, but allowing reminders e.g. in a "work" setting parameter group. Further in using WAP services (Wireless Application Protocol) the WAP application could have parameters added to a "private" and "work" setting parameter group to allow push messages (for example on results of a football or ice hockey match) in only the "private" mode, and e.g. to allow stock messages only in the "work" mode (but neither in the "car" mode, i.e. when the "car" setting parameter group is selected).

The invention is very useful for communication devices where applications can be installed (e.g. at a special store or over the air by downloading a new application from the Internet), since in the past the profiles or setting parameter groups have been fixed and thus have not been able to support later installed applications. Now, with the present invention, if one wants to install a new game, e.g. Snake II, a parameter regarding the game sounds can be added to e.g. the setting parameter group "silent" so that also the game sounds will go silent in the silent mode, i.e. when the setting parameter group "silent" is selected.

It is noted that the foregoing examples have been provided merely for the purpose of explanation and are in no way to be construed as limiting of the present invention. While the present invention has been described with reference to a preferred embodiment, it is understood that the words which have been used herein are words of description and illustration, rather than words of limitation. Changes may be made within the purview of the appended claims, as presently stated and as amended, without departing from the scope of the present invention in its aspects. Although the present invention has been described herein with reference to particular methods, materials, and embodiments, the present invention is not intended to be limited to the particulars disclosed herein, rather, the present invention extends to all functionally equivalent structures, methods and uses, such as are within the scope of the appended claims.

## Claims

1. A method for automatically launching at least one command specified by a user for starting at least one application after changing a group of setting parameters in a communication device, said group of setting parameters controlling settings of said communication device, whereby changing from a first group of setting parameters to a second group of setting parameters involves changing from using settings according to the first group of setting parameters to settings according to the second group of setting parameters, **characterized in that** the method comprises:
entering (401) into at least one group of setting parameters at least one command specified by the user for starting at least one application to be automatically launched when the at least one group of setting parameters becomes a current group of setting parameters currently used by the communication device;
determining (402,403) whether the current group of setting parameters has at least one command to be automatically launched; and
launching (404) the at least one command automatically if the current group of setting parameters has at least one command to be automatically launched.

2. The method according to claim 1, wherein the launched at least one command causes information to be sent (505) to a network conveying that the application is active in the communication device.

3. The method according to claim 1, wherein the entering and determining are performed by a profile manager of the communication device.

4. The method according to claim 1, wherein the communication device comprises a mobile device.

5. The method according to claim 4, wherein the mobile device comprises at least one of the following: a wireless mobile phone, a Personal Communicator, a portable computer, and a Smart Phone.

6. A communication device having at least one group of setting parameters that controls settings of the communication device, whereby changing from a first group of setting parameters to a second group of setting parameters involves changing from using settings according to the first group of setting parameters to settings according to the second group of setting parameters, **characterized in that** the communication device has a process for automatically launching at least one command specified by a user for starting at least one application after changing a selected group of setting parameters in a communication device, the process comprising:
entering (401) into at least one group of setting parameters at least one command specified by the user for starting at least one application to be automatically launched when the at least one group of setting parameters becomes a current group of setting parameters currently used by the communication device;
determining (402,403) whether the current group of setting parameters has at least one command to be automatically launched; and
launching (404) the at least one command automatically if the current group of setting parameters has at least one command to be automatically launched.

7. The communication device according to claim 6, wherein the communication device comprises a mobile device.

8. The communication device according to claim 7, wherein the mobile device comprises at least one of the following: a wireless mobile phone, a Personal Communicator, a portable computer, and a Smart Phone.

## Patentansprüche

1. Verfahren zum automatischen Auslösen mindestens eines durch einen Benutzer festgelegten Befehls zum Starten mindestens einer Anwendung nach Ändern einer Gruppe von Einstellungsparametern in einer Kommunikationseinrichtung, wobei die Gruppe von Einstellungsparametern Einstellungen der Kommunikationseinrichtung steuert, wodurch das Ändern von einer ersten Gruppe von Einstellungsparametern zu einer zweiten Gruppe von Einstellungsparametern die Änderung vom Benutzen der Einstellungen gemäß der ersten Gruppe von Einstellungsparametern zu den Einstellungen gemäß der zweiten Gruppe von Einstellungsparametern beinhaltet, **dadurch gekennzeichnet, dass** das Verfahren Folgendes umfasst:
Eingeben (401) mindestens eines durch den Benutzer festgelegten Befehls zum Starten mindestens einer automatisch auszulösenden Anwendung in mindestens eine Gruppe von Einstellungsparametern, wenn die mindestens eine Gruppe von Einstellungsparametern zu einer aktuellen Gruppe von Einstellungsparametern wird, die aktuell von der Kommunikationseinrichtung verwendet werden;
Bestimmen (402, 403), ob die aktuelle Gruppe von Einstellungsparametern mindestens einen automatisch auszulösenden Befehl aufweist; und automatisches Auslösen (404) des mindestens einen Befehls, falls die aktuelle Gruppe von Einstellungsparametern mindestens einen automatisch auszulösenden Befehl aufweist.

2. Verfahren nach Anspruch 1, wobei der ausgelöste mindestens eine Befehl bewirkt, dass eine Information an ein Netzwerk gesendet wird (505), die besagt, dass die Anwendung in der Kommunikationseinrichtung aktiv ist.

3. Verfahren nach Anspruch 1, wobei das Eingeben und das Bestimmen von einem Profilmanager der Kommunikationseinrichtung ausgeführt werden.

4. Verfahren nach Anspruch 1, wobei die Kommunikationseinrichtung eine mobile Einrichtung umfasst.

5. Verfahren nach Anspruch 4, wobei die mobile Einrichtung mindestens eines der folgenden umfasst: ein drahtloses Mobiltelefon, einen Personal Communicator, einen tragbaren Computer und ein Smartphone.

6. Kommunikationseinrichtung mit mindestens einer Gruppe von Einstellungsparametern, die die Einstellungen der Kommunikationseinrichtung steuern, wodurch das Ändern von einer ersten Gruppe von Einstellungsparametern zu einer zweiten Gruppe von Einstellungsparametern die Änderung vom Benutzen der Einstellungen gemäß der ersten Gruppe von Einstellungsparametern zu den Einstellungen gemäß der zweiten Gruppe von Einstellungsparametern beinhaltet, **dadurch gekennzeichnet, dass** die Kommunikationseinrichtung einen Prozess zum automatischen Auslösen mindestens eines durch den Benutzer festgelegten Befehls zum Starten mindestens einer Anwendung nach Änderung einer ausgewählten Gruppe von Einstellungsparametern in einer Kommunikationseinrichtung aufweist, wobei der Prozess Folgendes umfasst:
Eingeben (401) mindestens eines durch den Benutzer festgelegten Befehls zum Starten mindestens einer automatisch auszulösenden Anwendung in mindestens eine Gruppe von Einstellungsparametern, wenn die mindestens eine Gruppe von Einstellungsparametern zu einer aktuellen Gruppe von Einstellungsparametern wird, die aktuell von der Kommunikationseinrichtung verwendet werden;
Bestimmen (402, 403), ob die aktuelle Gruppe von Einstellungsparametern mindestens einen automatisch auszulösenden Befehl aufweist; und
automatisches Auslösen (404) des mindestens einen Befehls, falls die aktuelle Gruppe von Einstellungsparametern mindestens einen automatisch auszulösenden Befehl aufweist.

7. Kommunikationseinrichtung nach Anspruch 6, wobei die Kommunikationseinrichtung eine mobile Einrichtung umfasst.

8. Kommunikationseinrichtung nach Anspruch 7, wobei die mobile Einrichtung mindestens eines der folgenden umfasst: ein drahtloses Mobiltelefon, einen Personal Communicator, einen tragbaren Computer und ein Smartphone.

## Revendications

1. Procédé de lancement automatique d'au moins une commande spécifiée par un utilisateur pour le démarrage d'au moins une application après le changement d'un groupe de paramètres de réglage dans un dispositif de communication, ledit groupe de paramètres de réglage commandant les réglages dudit dispositif de communication, moyennant quoi le changement d'un premier groupe de paramètres de réglage pour un deuxième groupe de paramètres de réglage implique le changement d'utilisation de réglages selon le premier groupe de paramètres de réglage pour des réglages selon le deuxième groupe de paramètres de réglage, **caractérisé en ce que** le procédé comprend :
l'introduction (401) dans au moins un groupe de paramètres de réglage d'au moins une commande spécifiée par l'utilisateur pour le démarrage d'au moins une application à lancer automatiquement lorsque l'au moins un groupe de paramètres de réglage devient un groupe courant de paramètres de réglage actuellement utilisé par le dispositif de communication ;
la détermination (402, 403) du fait que le groupe courant de paramètres de réglage a ou non au moins une commande à lancer automatiquement ; et
le lancement automatique (404) de l'au moins une commande si le groupe courant de paramètres de réglage a au moins une commande à lancer automatiquement.

2. Procédé selon la revendication 1, dans lequel l'au moins une commande lancée provoque l'envoi (505) à un réseau d'informations transportant le fait que l'application est active dans le dispositif de communication.

3. Procédé selon la revendication 1, dans lequel les étapes d'introduction et de détermination sont exécutées par un gestionnaire de profil du dispositif de communication.

4. Procédé selon la revendication 1, dans lequel le dispositif de communication comprend un dispositif mobile.

5. Procédé selon la revendication 4, dans lequel le dispositif mobile comprend au moins l'un des suivants : un téléphone mobile sans fil, un assistant personnel, un ordinateur portable, et un smartphone.

6. Dispositif de communication ayant au moins un groupe de paramètres de réglage qui commande les réglages d'un dispositif de communication, moyennant quoi le changement d'un premier groupe de paramètres de réglage pour un deuxième groupe de paramètres de réglage implique le changement d'utilisation de réglages selon le premier groupe de paramètres de réglage pour des réglages selon le deuxième groupe de paramètres de réglage, **caractérisé en ce que** le dispositif de communication a un processus de lancement automatique d'au moins une commande spécifiée par un utilisateur pour le démarrage d'au moins une application après le changement d'un groupe sélectionné de paramètres de réglage dans un dispositif de communication, le processus comprenant :
l'introduction (401) dans au moins un groupe de paramètres de réglage d'au moins une commande spécifiée par l'utilisateur pour le démarrage d'au moins une application à lancer automatiquement lorsque l'au moins un groupe de paramètres de réglage devient un groupe courant de paramètres de réglage actuellement utilisé par le dispositif de communication ;
la détermination (402, 403) du fait que le groupe courant de paramètres de réglage a ou non au moins une commande à lancer automatiquement ; et
le lancement automatique (404) de l'au moins une commande si le groupe courant de paramètres de réglage a au moins une commande à lancer automatiquement.

7. Dispositif de communication selon la revendication 6, dans lequel le dispositif comprend un dispositif mobile.

8. Dispositif de communication selon la revendication 7, dans lequel le dispositif mobile comprend au moins l'un des suivants : un téléphone mobile sans fil, un assistant personnel, un ordinateur portable, et un smartphone.
